# EUROPEAN PATENT SPECIFICATION

(11) **EP 3 668 302 B1**
(45) Date of publication and mention of the grant of the patent: **11.08.2021**
(21) Application number: 18722885.3
(22) Date of filing: 24.04.2018
(51) Int. Cl.: A01B 37/00

(54) **A SYSTEM FOR CONTROLLING SOIL COMPACTION CAUSED BY WHEELS, AND USE OF SUCH SYSTEM**
SYSTEM ZUR KONTROLLE DER DURCH RÄDER VERURSACHTEN BODENVERDICHTUNG UND VERWENDUNG EINES SOLCHEN SYSTEMS
SYSTÈME DE COMMANDE DE COMPACTAGE DU SOL PROVOQUÉ PAR DES ROUES ET UTILISATION DUDIT SYSTÈME

(30) Priority: 17.08.2017 DK PA201700452
(43) Date of publication of application: 24.06.2020
(73) Proprietor: Agro Intelligence ApS, 8200 Aarhus N (DK)
(72) Inventor: GREEN, Ole, 6940 Lem St. (DK); NIELSEN, Søren Kirkegaard, 8600 Silkeborg (DK)
(74) Representative: Rasmussen, Martin Hoffgaard
(86) International application number: PCT/DK2018/050077
(87) International publication number: WO 2019/034213

(56) References cited:
- EP-A1- 1 889 531
- CN-A- 105 850 238
- US-A1- 2011 209 649
- US-A1- 2014 048 295

## Description

### Field of the invention

The present invention in general relates to improvement in the field of agriculture.

More specifically, the present invention in a first aspect relates to a system for soil loosening of soil which has been compacted by wheels of an agricultural vehicle or an agricultural implement.

In a second aspect the present invention relates to an agricultural vehicle comprising such a system.

In a third aspect the present invention relates to an agricultural implement comprising a system according to the first aspect of the invention.

In a fourth aspect the present invention relates to the use of a system of the first aspect of the present invention or of an agricultural vehicle according to the second aspect of the present invention, or of an agricultural implement according to the third aspect of the invention for avoiding uneven crop growth between crops being or to be sown in and outside a wheel track, respectively.

### Background of the invention

In order to prepare an agricultural field for sowing crop seeds a number of conditioning steps need to be performed so that optimum crop growth can be assured. These steps involve inter alia ploughing, and other types of seedbed preparations.

Such conditioning steps performed prior to the step of sowing the seeds, and the sowing operation itself are usually performed with the help of an implement configured to perform the intended purpose and these implements are usually being towed or carried by an agricultural vehicle, such as a tractor.

Upon driving a tractor on an agricultural field the areas of soil which have been subjected to the weight of the wheels, especially the rear wheels of the tractor will encounter a not insignificant degree of compaction in the soil.

If soil is being too compact an optimum growth of seeds may be prevented.

In order to alleviate this problem it is customary in harrowing and in sowing operations to provide for loosening the soil which has been just driven over by wheels of an agricultural vehicle or implement.

Accordingly, in prior art systems a soil loosening implement is provided behind the tractor. Such an implement comprises in respect of each rear wheel a group of tines or the like which are configured to interact with the soil in the specific wheel track so as to loosening the soil of the track which has just been compacted by being overdriven by that wheel.

Each group of tines may be adjusted with respect to working depth. However, once set for a specific working depth, each group of tines is fixed, and the working depth cannot be altered dynamically during operation of the vehicle.

CN 105850238 A discloses a system for loosening soil in an agricultural field. The system comprises a frame having a support wheel. The frame is configured for being towed behind a tractor. The frame comprises a number of soil loosening devices. Each soil loosening device comprises a soil loosening element, the working depth of which may be adjusted by means of an adjustment means. In respect of each soil loosening device a sensor senses the distance to the ground from that sensor in the area of the soil loosening element. A control unit receives signals from the sensors relating to the sensed distance and on the basis of this, a feedback signal is being send from the control unit to the adjustment means. Hereby the working depth of the soil loosening element is adjusted based on the sensed distance to the ground. CN 105850238 A does not disclose that a height distance between soil which has been compacted by wheels and soil which has not been compacted is being determined and that the degree of soil loosening in a wheel track is adjusted on the basis of such determination.

In order to provide optimum growth of crops it is important that each crop seed to be sown is provided with equal growth condition. Especially, in the early stages of growth the crop seedlings will encounter a competition with neighboring seedlings in relation to access of a sufficient amount of water, sunlight and nutrients. Once a specific crop seedling has lost this competition caused by stronger growth of the neighboring seedlings, that specific crop seedling is likely not to be able to overcome this early growth suppression. The result will be that seedlings growing in soil which has been subjected to compaction by a wheel of an agricultural implement will encounter non-optimum growth conditions compared to seedlings growing in neighboring soil which has not encountered this type of compaction.

Even though the prior art soil loosening systems provide for soil loosening in wheel tracks which have encountered soil compaction, the prior art soil loosening systems suffer from certain disadvantages.

One of these disadvantages of the prior art soil loosening systems is that in case the field to be worked comprises different types of soil it will happen that different degrees of soil compaction results when the tractor's wheels drive the soil. For this reason these different types of soil need different degrees of soil loosening in order to obtain an even soil compaction in the field. In case no differentiation is made as to degree of soil loosening in respect of different types of soil, the result is that soil compaction varies in different areas of the field. Such variations in soil compaction throughout the field imply different growth conditions for the crop seeds.

The same variations may result in case the speed of the tractor working the field varies; a relative slow speed is expected to result in a relative high degree of soil compaction, whereas a relative high speed is expected to result in a relative low degree of soil compaction.

Degree of tire pressure and choice of type of tire will also affect the degree of soil compaction. A non-optimum choice of type of tire and/or tire pressure will lead to excessive soil compaction.

Furthermore, variations in degree of soil compaction will be encountered when an agricultural vehicle or implement substantially alters its weight during work, such as during a sowing operation or a fertilizing operation or a harvesting operation.

Accordingly, there exists a need for an improved track loosening system which to a higher degree will ensure a more homogeneous soil compaction of a field to be harrowed or sown by crop seed.

It is an objective of the present invention to provide systems, vehicles, implements and uses which meet this need.

### Brief description of the invention

This objective is fulfilled with the present invention in its various aspects.

Accordingly, the present invention in its first aspect relates to a system for soil loosening of soil which has become compacted by wheels of an agricultural vehicle or an agricultural implement, said system comprises:
- one or more soil loosening devices for loosening soil in a wheel track;
- in respect of each soil loosening device, a sensing system;
- a control unit;
wherein each of said one or more soil loosening devices comprises one or more soil loosening elements for loosening soil is said wheel track, and wherein each of said one or more soil loosening elements is/are mechanically connected to adjustment means for adjusting the degree of soil loosening provided by said one or more soil loosening elements;
**characterized in** that in respect of each soil loosening device, said sensing system is configured for sensing a height difference between soil located in said wheel track and soil located outside said wheel track;
wherein said sensing system being configured to provide one or more sensing signals representative of said sensed height difference of soil; and
wherein said control unit is configured to receive said one or more sensing signals provided by said sensing system and to provide a control signal on the basis thereof;
wherein said adjustment means is configured to receive said control signal, and on the basis thereof to adjust the degree of soil loosening of said one or more soil loosening elements of said one or more soil loosening devices.

The present invention relates in a second aspect to an agricultural vehicle comprising a system according to the first aspect.

In a third aspect the present invention relates to an agricultural implement comprising a system according to the first aspect of the present invention.

In a fourth aspect the present invention relates to the use of a soil loosening system according to the first aspect of the present invention, or of an agricultural vehicle according to according to the second aspect of the present invention, or of an agricultural implement according to the third aspect of the present invention during performance of an agricultural work operation in an agricultural field.

The present invention provides in its various aspects for reducing variance in soil compaction in a field to be sown by crop seeds, thereby avoiding uneven crop growth between crops being or to be sown in and outside a wheel track, respectively. This is due to the ability of the system to provide an even soil compaction of the soil, irrespective of whether the soil has been compacted by wheels or not, thereby also minimizing the potential of erosion of water, erosion of soil caused by the wind and reducing pesticide leaching potential.

### Brief description of the figures

Fig. 1 is a side view diagrammatically illustrating the working mode of a prior art soil loosening system for an agricultural vehicle.
Fig. 2 is a side view diagrammatically illustrating the working mode of a soil loosening system for an agricultural vehicle according to the present invention.
Fig. 3 shows a diagram illustrating in more detail the various components of a soil loosening system according to the present invention and the mutual interactions between these components.
Fig. 4 is a top view illustrating possible positions of sensors, for use with the system of the invention, in relation to an agricultural implement.

### Detailed description of the invention

### The first aspect of the present invention

In the first aspect the present invention relates to a system for soil loosening of soil which has become compacted by wheels of an agricultural vehicle or an agricultural implement, said system comprises:
- one or more soil loosening devices for loosening soil in a wheel track;
- in respect of each soil loosening device, a sensing system;
- a control unit;
wherein each of said one or more soil loosening devices comprises one or more soil loosening elements for loosening soil is said wheel track, and wherein each of said one or more soil loosening elements is/are mechanically connected to adjustment means for adjusting the degree of soil loosening provided by said one or more soil loosening elements;
**characterized in** that in respect of each soil loosening device, said sensing system is configured for sensing a height difference between soil located in said wheel track and soil located outside said wheel track;
wherein said sensing system being configured to provide one or more sensing signals representative of said sensed height difference of soil; and
wherein said control unit is configured to receive said one or more sensing signals provided by said sensing system and to provide a control signal on the basis thereof;
wherein said adjustment means is configured to receive said control signal, and on the basis thereof to adjust the degree of soil loosening of said one or more soil loosening elements of said one or more soil loosening devices.

The system according to the first aspect of the present invention is intended to be mounted on an agricultural vehicle or implement. The sensing system of the implement makes it possible to detect a soil compaction of soil imparted by wheels of that vehicle or the implement. Furthermore, on the basis of the sensed height differences, which are indicative of a soil compaction, the soil loosening device(s) with its soil loosening elements provides for loosening the soil that has been compacted by the wheels. Thereby the soil which has been compacted by the wheels of the vehicle or the implement is brought back to a condition in which the soil compaction is eliminated by the action of the soil loosening elements. With the system of the first aspect of the present invention, the degree of soil loosening may be adjusted to a degree which result in the same degree of compression as the surrounding soil which has not (immediately) been subjected to the compacting effect of the wheels of the vehicle or implement. This ultimately provides for a more even soil quality and hence an improved crop yield.

In the present description and in the appended claims the term "agricultural vehicle" shall be construed to mean a vehicle that is self-propelled.

In the present description and in the appended claims the term "agricultural implement" shall be construed to mean an implement which is not self-propelled.

In the present description and in the appended claims it shall be understood that the one or more soil loosening devices each are responsible for soil loosening of an individual wheel track created by one or more wheels of the vehicle or implement, such as a wheel track created by a carrying wheel of an implement or of a front wheel and a rear wheel of a tractor having the same lateral position.

By incorporating more soil loosening devices in the system it is thus possible to loose soil which has been compacted by more wheels of a tractor and/or an implement.

It should be noted though, that a common control unit may be used in respect of more than one soil loosening device. It should likewise be noted that a common control unit may be configured for receiving sensing signals from more than one sensing system corresponding to more than one soil loosening device.

In one embodiment of the system of the first aspect of the present invention said sensing system comprises one and only one sensor configured for sensing a height difference between soil located in said wheel track and soil located outside said wheel track.

This embodiment provides for a very simple set-up as only sensor is used.

In one embodiment of the system of the first aspect of the present invention said sensing system comprises two or more sensors, wherein one sensor is configured for sensing a height of soil located in said wheel track, and wherein an additional and optionally more sensors are configured for sensing a height of soil located outside said wheel track.

Hereby is ensured a more accurate determination of a height difference between soil located in a wheel track and soil located outside that wheel track.

In one embodiment of the system of the first aspect of the present invention said sensing system comprises a sensor which is configured for sensing a height of soil located in said wheel track before that soil is being subjected to soil loosening.

This embodiment allows a direct determination of soil compaction in that wheel track because the height of soil in that wheel track is measured before any soil loosening is performed.

In one embodiment of the system of the first aspect of the present invention said sensing system comprises a sensor which is configured for sensing a height of soil located in said wheel track after that soil is being subjected to soil loosening.

This embodiment allows a direct determination of the degree of soil loosening in the wheel track because the height of soil in that wheel track is measured after the soil loosening is performed.

In one embodiment of the system of the first aspect of the present invention said sensing system comprises a sensor which is configured for sensing a height of soil located in said wheel track before that soil is being subjected to soil loosening; and wherein said sensing system furthermore comprises a sensor which is configured for sensing a height of soil located in said wheel track after that soil is being subjected to soil loosening.

Hereby improved sensing is achieved. The one sensor may sense the degree of soil compaction immediately after the wheel track has been formed. On the basis of the measured height of the soil in this wheel track the control unit may send its feedback to the adjustment means. As a control the sensed height of soil located in said wheel track after that soil is being subjected to soil loosening is used. And on the basis of this sensed height an adjustment control signal may be sent to the adjustment means.

In one embodiment of the system of the first aspect of the present invention the number of soil loosening devices is 1 - 10, and being configured for soil loosening in a single or more wheel tracks, such as in the wheel tracks of one or both of the two rear wheels of an agricultural vehicle; or for soil loosening in the wheel tracks of four wheels of an agricultural vehicle; and/or for soil loosening in one or more wheel tracks of an agricultural implement being towed by an agricultural vehicle.

More soil loosening devices provides for being able to perform soil loosening in respect of more wheels on the vehicle and/or implement.

In one embodiment of the system of the first aspect of the present invention said soil loosening elements independently being tines or coulter blades.

These types of soil loosening elements provides for efficient soil loosening.

In one embodiment of the system of the first aspect of the present invention said and in respect of one or more of said soil loosening devices, the working width of said corresponding soil loosening elements independently being 20 - 200 cm, such as 30 - 180 cm, for example 40 - 170 cm, e.g. 50 - 160 cm, such as 60 - 150 cm, for example 70 - 140 cm, e.g. 80 - 130 cm, such as 90 - 120 cm or 100 - 110 cm.

Such working widths allow efficient soil loosening even in respect of the widest wheels used for agricultural implements and vehicles.

In one embodiment of the system of the first aspect of the present invention and in respect of one or more soil loosening devices, said adjustment means independently are configured to adjust the degree of soil loosening by altering the working depth of said one or more soil loosening elements; and/or by altering the angle of attack of said one or more soil loosening elements; and/or by altering a speed of movement of said one or more soil loosening elements, in a case said soil loosening provided by said one or more soil loosening elements is provided by mechanically driven soil loosening elements; and/or by movement of said one or more soil loosening elements by means of parallelogrammic suspension means.

These types and directions of movements of the soil loosening elements provide for efficient soil loosening.

In one embodiment of the system of the first aspect of the present invention said control unit is configured for providing said control signal to said adjustment means of said one or more soil loosening devices on the basis of said one or more sensing signals in accordance with a predetermined algorithm.

Defining a predetermined algorithm allow for efficient control of the soil loosening system, thereby optimizing the quality of soil loosening.

In one embodiment of the system of the first aspect of the present invention said predetermined algorithm is configured in such a way that said control unit is configured to provide a control signal to said adjustment means so as to increase the degree of soil loosening of said one or more soil loosening devices in case said sensing system is sensing a higher soil height at a location outside a wheel track compared to the soil height of soil loosened soil at a location in said wheel track.

In one embodiment of the system of the first aspect of the present invention said predetermined algorithm is configured in such a way that said control unit is configured to provide a control signal to said adjustment means so as to decrease the degree of soil loosening of said one or more soil loosening devices in case said sensing system is sensing a higher soil height of soil loosened soil at a location in said wheel track, compared to the soil height at a location outside said wheel track.

Such an algorithm provides for efficient soil loosening.

In one embodiment of the system of the first aspect of the present invention said predetermined algorithm is configured in such a way that said control unit is configured to provide a control signal to said adjustment means on the basis of a sensed height of soil plus/minus a predetermined offset value.

Incorporating an offset value makes it possible to aim at a soil loosening, in which the height of soil which has been loosened is higher than the soil outside the wheel track. This is an advantage as soil loosened soil typically will be less compact immediately after soil loosening, compared to the surrounding soil outside the wheel track and also compared to the degree of compaction of soil in said wheel tract after some time has passed.

In one embodiment of the system of the first aspect of the present invention said adjustment means of said one or more soil loosening devices independently comprises one or more hydraulic actuators, one or more pneumatic actuators, or one or more electric actuators for adjustment of said degree of soil loosening.

These types of actuators provides for efficient and fast regulation of the degree of soil loosening of the soil loosening elements of the adjustment means.

In one embodiment of the system of the first aspect of the present invention and in respect of one or more of said soil loosening devices, said soil loosening device comprises two or more soil loosening elements which are configured to move in concert.

Hereby is achieved soil loosening in a wider width compared to the situation in which only one soil loosening element is used per soil loosening device.

In one embodiment of the system of the first aspect of the present invention said and in respect of one or more of said soil loosening devices, said one or more soil loosening elements independently are configured for being moved by said adjustment means by rotation around a rotational axis, such as an essentially horizontal rotational axis.

In one embodiment of the system of the first aspect of the present invention and in respect of one or more of said soil loosening devices, said one or more soil loosening elements independently are configured for being moved by said adjustment means by movement in an essential vertical direction.

In one embodiment of the system of the first aspect of the present invention said and in respect of one or more of said soil loosening devices, said one or more soil loosening elements are suspended in a parallelogrammic suspension, thereby allowing said soil loosening elements to be moved by said adjustment means by movement in a direction having a vertical component and a horizontal component.

These three different ways of adjusting the degree of soil loosening provides for efficient soil loosening.

In one embodiment of the system of the first aspect of the present invention and in respect of one or more of said soil loosing devices said sensing system is configured for providing said one or more sensing signals via mechanical sensing means.

In one embodiment of the system of the first aspect of the present invention said sensing system is comprising a sensing wheel which is pivotally suspended and configured to follow the surface of soil in said wheel track, and also comprising one or more additionally sensing wheels which is/are pivotally suspended and configured to follow the surface of soil located outside said wheel track; wherein the height difference between soil loosened soil located in said wheel track and soil located outside said wheel track is determined on the basis of the respective sensed heights of said two or more sensing wheels.

Hereby is ensured, in a simple and reliable way, the sensing of the height of soil.

In one embodiment of the system of the first aspect of the present invention and in respect of one or more of said soil loosing devices said sensing system is configured for providing said one or more sensing signals via non-mechanical sensing means.

In one embodiment of the system of the first aspect of the present invention said sensing system comprising one or more transmitters configured to transmit an electromagnetic radiation; and comprising one or more receivers which is/are configured to receive a reflected signal of said transmitted electromagnetic radiation; and wherein the height difference between soil located in said wheel track and soil located outside said wheel track is determined on the basis of detection of time-of-flight, frequency, wavelength, intensity/amplitude of the electromagnetic radiation involved, or a combination thereof.

In one embodiment of the system of the first aspect of the present invention said non-mechanical sensing system comprises a laser sensing system, an infrared sensing system or a laser range scanning sensing system.

In one embodiment of the system of the first aspect of the present invention and in respect of one or more of said soil loosing devices said sensing system is configured for providing said one or more sensing signals via sonic sensing means.

In one embodiment of the system of the first aspect of the present invention said sensing system comprising one or more transmitters configured to transmit a sonic radiation; and comprising one or more receivers which is/are configured to receive a reflected sonic signal of said transmitted sonic radiation; and wherein the height difference between soil located in said wheel track and soil located outside said wheel track is determined on the basis of detection of time-of-flight, frequency, wavelength, intensity/amplitude of the sonic radiation involved, or a combination thereof.

These non-mechanical sensing means provides sensing mechanisms which are less prone to mechanical wear and tear.

In one embodiment of the system of the first aspect of the present invention said control unit is configured in such a way that both in respect of soil in said wheel track and in respect of soil outside said wheel track, a number of measurement samples of soil heights are made; and wherein said control unit is configured for subsequently averaging these samples of soil heights in said wheel track on the one hand and also for averaging these samples of soil heights outside said wheel track on the other hand, and wherein said control signal is based on the difference of said averaged samples of soil heights.

In one embodiment of the system of the first aspect of the present invention said control unit is configured in such a way that the measurement samples of soil heights independently is performed at a sampling rate of 1 - 200 Hz; such as 5 - 150 Hz, for example 10 - 100 Hz, such as 25 - 80 Hz, e.g. 30 - 60 Hz; and/or wherein said control unit is configured in such a way that said control signal independently is provided at a rate of 0.1 - 10 Hz, such as 0.5 - 9 Hz, e.g. 1 - 8 Hz, such as 2 - 7 Hz, e.g. 3 - 6 Hz or 4 - 5 Hz.

Control of the soil loosening system according to averaging procedures provides for efficient sensing and feedback and thus for efficient soil loosening of the soil loosening system.

In one embodiment of the system of the first aspect of the present invention said control unit is configured to perform a filtering, such as a low-pass filtering, of the sensed heights or height differences prior to providing said control signal.

Filtration provides for better and more accurate description of the soil surfaces, and finally an improved soil loosening operation.

In one embodiment of the system of the first aspect of the present invention said control unit is configured to provide said control signal by means of a P (Proportional) control, PID (Proportional Integration Differentiation) control, three positon control, or a step control.

These ways of providing feedback provides for efficient soil loosening of the soil loosening system.

In one embodiment of the system of the first aspect of the present invention said one or more of said sensors configured for sensing a height of soil located outside a wheel track independent is/are configured for being arranged, in relation to the direction of movement, in front of said wheel, and/or in a lateral position in relation to said wheel and/or behind said wheel; or a combination thereof.

These locations are suitable locations for arranging some of the sensors.

In one embodiment of the system of the first aspect of the present invention said system further comprising one or more mounting brackets configured for carrying one or more of said soil loosening devices, or parts thereof, and for being mounted on an agricultural vehicle or implement.

In one embodiment of the system of the first aspect of the present invention said system further comprising one or more mounting brackets configured for carrying said sensing system, or parts thereof, and for being mounted on an agricultural vehicle or implement.

In one embodiment of these embodiments of the present invention said mounting bracket configured for carrying one or more of said soil loosening devices and said mounting bracket configured for carrying said sensing system are the same bracket or are different brackets.

Providing the system with brackets provides for easy mounting on a vehicle or implement and further provides for easy adjustment.

In one embodiment of the system of the first aspect of the present invention said system further comprising a monitor and/or input means; wherein said monitor is configured for being coupled to said control unit so as to display to a user the settings and/or information relating to the operation of said system; and wherein said input means, e.g. in a form of a keyboard, is configured for being coupled to said control unit so as enable setting up and/or calibration of said system; said monitor and/or said input means optionally being in the form of an HMI (Human-Machine Interface) or a GUI (Graphical User Interface) .

Such means provides for easy control of the soil loosening system and monitoring of the operation thereof.

In one embodiment of the system of the first aspect of the present invention said system further comprises a GNSS (Global Navigation Satellite System) receiver for providing information of the location on the field of said agricultural vehicle or said agricultural implement.

In a particular embodiment said control unit is configured to receive information from said GNSS receiver and also is being configured to have stored therein, data relating to characteristics of the soil at different locations of a field.

Such embodiments enables varying the degree of soil loosening, depending on the different types of soil in various areas of the field, such as sandy areas, muddy areas, areas of clay soil.

In one embodiment of the system of the first aspect of the present invention said sensing system comprises one or more force transducers which are configured for sensing a horizontally oriented force of one or more of said soil loosening elements, such as a strain gauge; or in the form of one or more sensors for sensing a hydraulic pressure in a hydraulic actuator which is configured for suspending one or more of said one or more soil loosening elements.

This provides for a simple way of providing the sensing system of the system of the invention.

In one embodiment of the system of the first aspect of the present invention said system furthermore comprises one or more axle or wheel load sensors for sensing the load on one or more axles or wheels of said agricultural vehicle or agricultural implement;
wherein said control unit is configured for receiving a load sensing signal from said one or more axle or wheel load sensors; and
wherein said control unit is configured for providing said control signal to said adjustment means in a way wherein said control signal is depending on the load as sensed by said one or more load sensors, thereby allowing the severity of the soil loosening provided by said soil loosening devices to be dependent of the axle or wheel load of said agricultural vehicle or said agricultural implement.

Hereby is attained that in a situation where the axle load during field work is not constant, for example during harvesting or spreading operations, the severity of the soil loosening is made depending on the load of the wheels or axle of the agricultural vehicle or implement.
Thereby an even better soil loosening quality be obtained.

This embodiment is especially preferably in a case where the control unit is configured to provide a control signal to the adjustment means on the basis of a sensed height of soil plus/minus a predetermined offset value.

In general the system according to the first aspect of the present invention in all its embodiments is preferably configured for automatic operation. Thereby soil loosening to a desired extent may automatically be achieved.

### The second aspect of the present invention

In a second aspect the present invention relates to an agricultural vehicle comprising a system according to the first aspect.

### The third aspect of the present invention

In a third aspect the present invention relates to an agricultural implement comprising a system according to the first aspect of the present invention.

In one embodiment of the implement of the third aspect of the present invention said implement is a tilling implement, such as a harrowing implement or a sowing implement for sowing crop seeds.

In one embodiment of the implement of the third aspect of the present invention said implement is a sowing implement, and wherein said sensing system comprises two or more sensors wherein one or more of said two or more sensors are configured to sense the working depth of one or more coulters on a sowing machine submerged in soil located in said wheel track; and wherein one or more of said two or more sensors are configured to sense the working depth of one or more coulters on a sowing machine submerged in soil located outside said wheel track.

This embodiment utilized mechanics already in existence on a sowing machine for providing sensing signals.

In one embodiment said implement said implement is a sowing implement, and wherein said sensing system comprises two or more sensors wherein one or more of said two or more sensors are configured to sense the depth of one or more seed drills on said sowing implement submerged in soil located in said wheel track; and wherein one or more of said two or more sensors are configured to sense the working depth of one or more seed drills on said sowing implement submerged in soil located outside said wheel track.

### The fourth aspect of the present invention

In a fourth aspect the present invention relates to the use of a soil loosening system according to the first aspect of the present invention, or of an agricultural vehicle according to according to the second aspect of the present invention, or of an agricultural implement according to the third aspect of the present invention during performance of an agricultural work operation in an agricultural field.

In one embodiment of the use of the fourth aspect of the present invention said use is for reducing uneven crop growth between crops being or to be sown in and outside a wheel track, respectively; for reducing erosion and/or for reducing dilution of pesticides.

Hereby improved crop yield may be obtained.

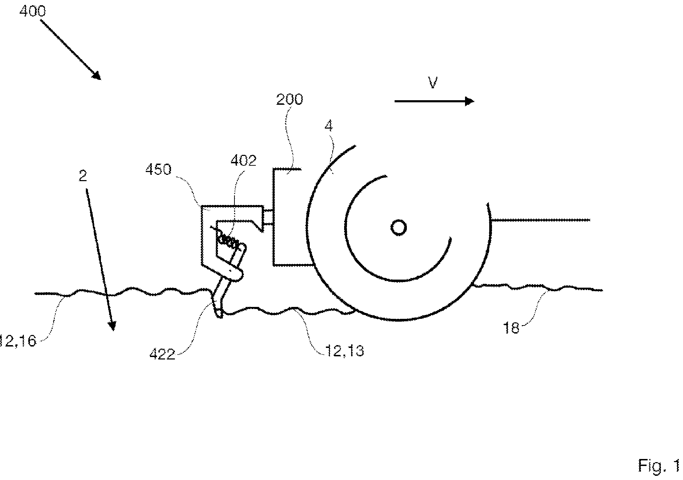

Referring now to the drawings for further illustration of the invention in its various aspects, Fig. 1 is a side view which diagrammatically illustrates the working mode of a prior art soil loosening system for an agricultural vehicle.

Fig. 1 shows an agricultural vehicle 200 in the form of a tractor which comprises the rear wheel 4. The tractor is moving in the direction of the movement as indicated by the arrow V.

Behind the tractor a soil loosening system is mounted on mounting bracket 450. The mounting bracket comprises a soil loosening element 422 which is pivotally suspended in on the bracket 450. A spring 402 having a predetermined spring load is connected between the bracket 450 and the soil loosening element 422.

The soil loosening element is arranged in a lateral position which corresponds to the lateral position of the rear wheel 4 of the tractor. For the sake of simplicity only one soil loosening element is depicted in Fig. 1. In a real agricultural operation, more soil loosening elements 422 arranged next to each other will be applied so as to cover essentially the full width of each rear wheel 4.

As the tractor moves over the soil 2 the rear wheel 4 carrying a huge weight will effect a compaction of the soil 18 thus resulting in compacted soil 13 in the wheel track 12. This is illustrated in Fig. 1 by the lower level of soil at location 13 compared to soil at location 18.

In the soil loosening system of the prior art the soil loosening element 422 will via the spring load be pressed into the soil at position 13 of the wheel track 12, thereby loosening the soil of the wheel track. This is illustrated in fig. 1 by the higher level of soil at location 16 compared to soil of the wheel track 12 at location 13 before its soil loosening.

However, in the prior art soil loosening system there is no possibility for dynamically adjusting the degree of soil loosening in the wheel track while driving over the soil.

Thereby the soil loosening will be determined inter alia by the fixed height of mounting of the bracket 450 carrying the soil loosening element 422, the predetermined spring load of the spring 402 actuating the soil loosening element 422, by the nature of the soil and by the driving speed of the vehicle.

The lack of any dynamic control of the degree of soil loosening in the wheel track 12 ultimately leads to different degree of compaction and thus differences in growth conditions of crops to be grown in soil being present in a wheel track and soil being present outside a wheel track.

Also, a non-optimum choice of tires or tire pressure also result in different degree of soil compaction as does varying weight load of the agricultural vehicle or implement as encountered e.g. during sowing and fertilizing.

These problems are solved by the present invention in its various aspects.

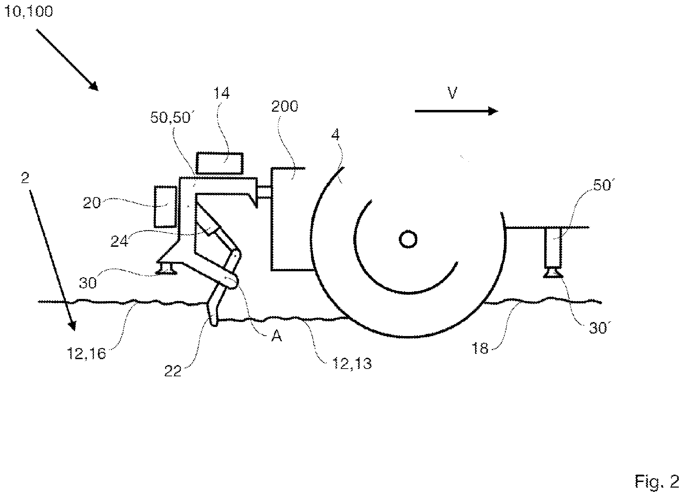

Fig. 2 is a side view diagrammatically illustrating the working mode of a soil loosening system for an agricultural vehicle according to the present invention.

Fig. 2 shows an agricultural vehicle 200 in the form of a tractor which comprises the rear wheel 4. The tractor is moving in the direction of the movement as indicated by the arrow V.

Behind the tractor a soil loosening system100 comprising a single soil loosening device 10 is mounted on mounting bracket 50. The mounting bracket comprises a soil loosening element 22 which is pivotally suspended on the bracket 50. An adjustment mean 24 configured to be able to extend and contract is connected to an upper end of the soil loosening element thereby allowing the adjustment the working depth of the soil loosening element 22; as the adjustment mean 24 is extended, the working depth of the soil loosening element 22 is reduced and vice versa. In a real situation the adjustment mean 24 may be supplied with a spring arranged in parallel.

The soil loosening system100 in Fig. 2 furthermore comprises a sensing system 14. The sensing system comprises a first sensor 30 arranged behind, in relation to the direction of movement, the soil working element 22. The first sensor 30 is configured for sensing a height of soil in the wheel track 12 at a location 16 after that wheel track 12 has been subjected to soil loosening by said soil loosening element 22.

A second sensor 30' is arranged on a bracket 50' mounted on the vehicle 200 in front of the wheel 4. At this position that sensor 30' is capable at sensing a soil height at a position 18 corresponding to soil which has not been be compacted by the wheel 4.

The sensing system 14 is configured to receive information corresponding to the heights sensed by the sensor 30 and the sensor 30', respectively and on the basis of this information to determine a height difference between the soil and the first sensor 30 at location 16 on the one hand and the soil and the second sensor 30' at location 18 on the other hand.

This information is being sent to a control unit 20 which according to a predetermined algorithm is configured to send a control signal 28 to the adjustment means 24. The control signal 28 adjusts the degree of soil loosening performed by said soil loosening element 22 by adjusting the working depth thereof.

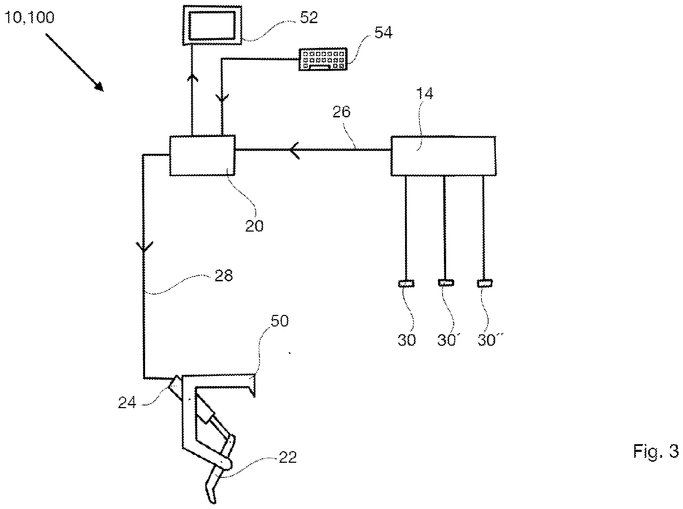

This is further illustrated in fig. 3.

Fig. 3 shows a diagram illustrating part of the soil loosening system according to the present invention. In Fig. 3 it is seen that the three sensors 30, 30' and 30" are connected to the sensing system 14, which based on the signals received form the sensors 30, 30' and 30" sends a sensing signal 26 to a control unit 20.

Based on the sensing signal 26 received by the control unit 20, the control unit generates a control signal 28 which is being sent to the adjustment means 24 which in turn controls the degree of soil loosening by adjustment of the working depth of the soil loosening element 22 as explained above.

The soil loosening system may also comprise a monitor 52 for monitoring the settings and operation of the system. Furthermore, the control system 100 may comprise input means 54, such as a keyboard for programming and/or calibrating the working mode of the system.

The control unit 20 is usually configured in such a way the control unit 20 provides a control signal 28 to the adjustment means 24 so as to increase the degree of soil loosening of the soil loosening element 22 in case the sensing system by means of e.g. the first sensor 30 and the second sensor 30' is sensing a higher soil height at a location 18 outside a wheel track compared to the soil height at a location 16 of said wheel track after having been subjected to soil loosening.

Furthermore, the control unit 20 is usually configured in such a way the control unit 20 provides a control signal 28 to the adjustment means 24 so as to reduce the degree of soil loosening of the soil loosening element 22 in case the sensing system by means of e.g. the first sensor 30 and the second sensor 30' is sensing a lower soil height at a location 18 outside a wheel track compared to the soil height at a location 16 of said wheel track after having been subjected to soil loosening.

Returning to fig. 2 again, the soil loosening element 22 is arranged in a lateral position which corresponds to the lateral position of the rear wheel 4 of the tractor. For the sake of simplicity only one soil loosening element is depicted in Fig. 2. In a real agricultural operation, more soil loosening elements 22 arranged next to each other will be applied so as to cover essentially the full width of the rear wheels.

In use with an agricultural vehicle or an agricultural implement the soil loosening system 100 will comprise two or more soil loosening devices 10, wherein each soil loosening device is responsible of soil loosening in respect of a specific wheel track of said agricultural vehicle and/or implement.

In a case where more than one soil loosening device 10 is used in respect of more than one wheel of an agricultural vehicle or implement, these more than one soil loosening devices 10 may share a common control unit 20, and a common sensing system 14. Alternatively, each soil loosening device may comprise its own dedicated control unit 20, and sensing system 14.

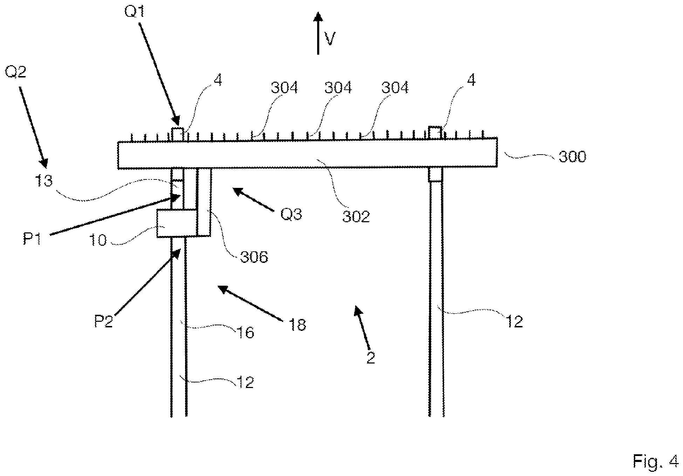

Fig. 4 is a top view illustrating possible positions of sensors, for use with the system of the invention, in relation to an agricultural implement.

Fig. 4 shows a field of soil 2 onto which an agricultural implement 300 is arranged and moving forward in the direction illustrates by the arrow V.

The implement 300 comprises a transverse frame 302 onto which soil working tines 304 are arranged. The frame 302 of the implement 300 is carried by two wheels 4 or gliding shoes. These wheels result in wheel tracks 12, comprising soil 13 and 16.

On the left side of the implement is arranged on a bracket 306 a soil loosening device 10 of the system of the first aspect of the present invention. The soil loosening device comprises a number of soil loosening elements 22 (not visible in Fig. 4).

The soil loosening device 10 causes the soil 13 located in the wheel track 12 located immediately behind the wheel 4 to be soil loosened so that the soil loosened soil 16 remains after being subjected to the soil loosening device 10.

In fig. 4 possible positions P1, P2, P3, Q1, Q2 and Q3 of sensors 30,30',30", in relation to the agricultural implement 300 are illustrated.

In case a sensor 30, 30',30" is positioned so as to sense the height of soil in position P1, the height of soil in the wheel track 12, 13 before the soil is being subjected to any soil loosening can be sensed.

In case a sensor 30, 30',30" is positioned so as to sense the height of soil in position P2, the height of soil in the wheel track 12, 16 after the soil has been subjected to soil loosening can be sensed.

In case a sensor 30, 30',30" is positioned so as to sense the height of soil in position Q1, Q2 or Q3, the height of soil 18 located outside a wheel track 12 can be sensed.

In addition to the positions Q1, Q2 and Q3 many other possible positions for sensing the height of soil outside a wheel track 12 is possible.

Fig. 4 only illustrates possible positions P1, P2, Q1, Q2 and Q3 in respect of a single soil loosening device which loses soil compacted by a single wheel 4. However, a similar soil loosening device 10 may be applied as well in respect of the right wheel 4 of the implement 300.

Likewise, the same positions P1, P2, Q1, Q2 and Q3 in relation to wheels of an agricultural vehicle, as illustrated in respect of an agricultural implement, may be used.

It should be understood that all features and achievements discussed above and in the appended claims in relation to one aspect of the present invention and embodiments thereof apply equally well to the other aspects of the present invention and embodiments thereof.

### List of reference numerals

- 2: Soil
- 4: Wheels of an agricultural vehicle or an agricultural implement
- 10: Soil loosening device
- 12: Wheel track
- 13: Soil located in a wheel track before soil loosening
- 14: Sensing system
- 16: Soil which has been compacted by a wheel and subsequently loosened by a soil loosening element
- 18: Soil located outside a wheel track
- 20: Control unit
- 22: Soil loosening element
- 24: Adjustment means
- 26: Sensing signal
- 28: Control signal
- 30,30', 30": Sensor of sensing system
- 50,50': Mounting bracket
- 52: Monitor
- 54: Input means of control system
- 100: Soil loosening system
- 200: Agricultural vehicle
- 300: Agricultural implement
- 302: Transverse frame of agricultural implement
- 304: Soil working tine of agricultural implement
- 306: Bracket of agricultural implement
- 400: Prior art soil loosening system
- 402: Spring
- 422: Soil loosening element of prior art soil loosening system
- 450: Mounting bracket of prior art soil loosening system
- V: Direction of movement of vehicle or implement
- P1,P2,: Possible position of sensor
- Q1,Q2,Q3: Possible position of sensor

## Claims

1. A system (100) for soil loosening of soil (2) which has become compacted by wheels (4) of an agricultural vehicle (200) or an agricultural implement (300), said system comprises:
- one or more soil loosening devices (10) for loosening soil in a wheel track (12);
- in respect of each soil loosening device, a sensing system (14);
- a control unit (20);
wherein each of said one or more soil loosening devices (10) comprises one or more soil loosening elements (22) for loosening soil is said wheel track (12), and wherein each of said one or more soil loosening elements (22) is/are mechanically connected to adjustment means (24) for adjusting the degree of soil loosening provided by said one or more soil loosening elements (22);
**characterized in that** in respect of each soil loosening device (10), said sensing system (14) is configured for sensing a height difference between soil located in said wheel track (12) and soil (18) located outside said wheel track (12);
wherein said sensing system (14) being configured to provide one or more sensing signals (26) representative of said sensed height difference of soil; and
wherein said control unit (20) is configured to receive said one or more sensing signals (26) provided by said sensing system (14) and to provide a control signal (28) on the basis thereof;
wherein said adjustment means (24) is configured to receive said control signal (28), and on the basis thereof to adjust the degree of soil loosening of said one or more soil loosening elements (22) of said one or more soil loosening devices (10).

2. A system (100) according to claim 1, wherein said sensing system (14) comprises one and only one sensor (30, 30',30") configured for sensing a height difference between soil (13,16) located in said wheel track (12) and soil (18) located outside said wheel track (12); or wherein said sensing system (14) comprises two or more sensors (30, 30',30"), wherein one sensor (30) is configured for sensing a height of soil (13,16) located in said wheel track (12), and wherein an additional and optionally more sensors (30',30") are configured for sensing a height of soil (18) located outside said wheel track (12);
and/or
wherein said sensing system (14) comprises a sensor (30,30',30") which is configured for sensing a height of soil (13) located in said wheel track (12) before that soil (13) is being subjected to soil loosening;
and/or
wherein said sensing system (14) comprises a sensor (30, 30',30") which is configured for sensing a height of soil (16) located in said wheel track (12) after that soil (16) is being subjected to soil loosening;
and/or
wherein said sensing system (14) comprises a sensor (30, 30',30") which is configured for sensing a height of soil (13) located in said wheel track (12) before that soil (13) is being subjected to soil loosening; and wherein said sensing system (14) furthermore comprises a sensor (30, 30',30") which is configured for sensing a height of soil (16) located in said wheel track (12) after that soil (16) is being subjected to soil loosening.

3. A system (100) according to claim 1 or 2 wherein said soil loosening elements (22) independently being tines or coulter blades.

4. A system (100) according to any of the preceding claims, wherein in respect of one or more soil loosening devices (10), said adjustment means (24) independently are configured to adjust the degree of soil loosening by altering the working depth of said one or more soil loosening elements (22); and/or by altering the angle of attack of said one or more soil loosening elements (22); and/or by altering a speed of movement of said one or more soil loosening elements (22), in a case said soil loosening provided by said one or more soil loosening elements is provided by mechanically driven soil loosening elements; and/or by movement of said one or more soil loosening elements (22) by means of parallelogrammic suspension means.

5. A system (100) according to any of the preceding claims, wherein said control unit (20) is configured for providing said control signal (28) to said adjustment means (24) of said one or more soil loosening devices (10) on the basis on said one or more sensing signals (26) in accordance with a predetermined algorithm;
wherein said predetermined algorithm optionally is configured in such a way that said control unit (20) is configured to provide a control signal (28) to said adjustment means (24) so as to increase the degree of soil loosening of said one or more soil loosening devices (10) in case said sensing system is sensing a higher soil height at a location (18) outside a wheel track compared to the soil height of soil loosened soil at a location (16) in said wheel track (12); and/or wherein said predetermined algorithm is configured in such a way that said control unit (20) is configured to provide a control signal (28) to said adjustment means (24) so as to decrease the degree of soil loosening of said one or more soil loosening devices (10) in case said sensing system (14) is sensing a higher soil height of soil loosened soil at a location (16) in said wheel track (12), compared to the soil height at a location (18) outside said wheel track (12); and/or wherein said predetermined algorithm is configured in such a way that said control unit (20) is configured to provide a control signal (28) to said adjustment means (24) on the basis of a sensed height of soil plus/minus a predetermined offset value.

6. A system (100) according to any of the preceding claims, wherein in respect of one or more of said soil loosening devices (10), said one or more soil loosening elements (22) independently are configured for being moved by said adjustment means (24) by rotation around a rotational axis (A), such as an essentially horizontal rotational axis; or wherein in respect of one or more of said soil loosening devices (10), said one or more soil loosening elements (22) independently are configured for being moved by said adjustment means (24) by movement in an essential vertical direction;
and/or
wherein in respect of one or more of said soil loosening devices (10), said one or more soil loosening elements (22) are suspended in a parallelogrammic suspension, thereby allowing said soil loosening elements (22) to be moved by said adjustment means (24) by movement in a direction having a vertical component and a horizontal component.

7. A system (100) according to any of the preceding claims, wherein in respect of one or more of said soil loosing devices (10) said sensing system (14) is configured for providing said one or more sensing signals (26) via mechanical sensing means; or wherein in respect of one or more of said soil loosing devices (10) said sensing system (14) is configured for providing said one or more sensing signals (26) via non-mechanical sensing means; or wherein in respect of one or more of said soil loosing devices (10) said sensing system (14) is configured for providing said one or more sensing signals (26) via sonic sensing means;
and/or
wherein said sensing system is configured for providing said one or more sensing signals (26) via mechanical sensing means comprising a sensing wheel which is pivotally suspended and configured to follow the surface of soil (13,16) in said wheel track (12), and also comprising one or more additionally sensing wheels (40) which is/are pivotally suspended and configured to follow the surface of soil (18) located outside said wheel track (12); wherein the height difference between soil loosened soil (16) located in said wheel track (12) and soil (18) located outside said wheel track (12) is determined on the basis of the respective sensed heights of said two or more sensing wheels;
and/or
wherein said sensing system (14) is configured for providing said one or more sensing signals (26) via non-mechanical sensing means comprising one or more transmitters configured to transmit an electromagnetic radiation; and comprising one or more receivers which is/are configured to receive a reflected signal of said transmitted electromagnetic radiation; and wherein the height difference between soil (13,16) located in said wheel track (12) and soil (18) located outside said wheel track is determined on the basis of detection of time-of-flight, frequency, wavelength, intensity/amplitude of the electromagnetic radiation involved, or a combination thereof; wherein said sensing system (14) optionally comprises a laser sensing system, an infrared sensing system or a laser range scanning sensing system.

8. A system (100) according to claim 7, wherein said sensing system (14) is configured for providing said one or more sensing signals (26) via sonic sensing means comprising one or more transmitters configured to transmit a sonic radiation; and comprising one or more receivers which is/are configured to receive a reflected sonic signal of said transmitted sonic radiation; and wherein the height difference between soil (13,16) located in said wheel track (12) and soil (18) located outside said wheel track (12) is determined on the basis of detection of time-of-flight, frequency, wavelength, intensity/amplitude of the sonic radiation involved, or a combination thereof.

9. A system (100) according to any of the preceding claims, wherein said control unit (20) is configured in such a way that both in respect of soil (13,16) in said wheel track (12) and in respect of soil (18) outside said wheel track (12), a number of measurement samples of soil heights are made; and wherein said control unit (20) is configured for subsequently averaging these samples of soil heights in said wheel track (12) on the one hand and also for averaging these samples of soil heights outside said wheel track (12) on the other hand, and wherein said control signal (28) is based on the difference of said averaged samples of soil heights;
wherein said control unit (20) optionally is configured in such a way that the measurement samples of soil heights independently is performed at a sampling rate of 1 - 200 Hz; such as 5 - 150 Hz, for example 10 - 100 Hz, such as 25 - 80 Hz, e.g. 30 - 60 Hz; and/or wherein said control unit (20) is configured in such a way that said control signal (28) independently is provided at a rate of 0.1 - 10 Hz, such as 0.5 - 9 Hz, e.g. 1 - 8 Hz, such as 2 - 7 Hz, e.g. 3 - 6 Hz or 4 - 5 Hz.

10. A system (100) according to any of the preceding claims, wherein said control unit (20) is configured to perform a filtering, such as a low-pass filtering, of the sensed heights or height differences prior to providing said control signal (28);
wherein said control unit (20) optionally is configured to provide said control signal (28) by means of, a P (Proportional) control, PID (Proportional Integration Differentiation) control, three positon control, or a step control.

11. A system (100) according to any of the preceding claims further comprising a monitor (52) and/or input means (54); wherein said monitor (52) is configured for being coupled to said control unit (20) so as to display to a user the settings and/or information relating to the operation of said system; and wherein said input means (54), e.g. in a form of a keyboard, is configured for being coupled to said control unit (20) so as to enable setting up and/or calibration of said system; said monitor (52) and/or said input means (54) optionally being in the form of an HMI (Human-Machine Interface) or a GUI (Graphical User Interface);
and/or
wherein said system further comprising a GNSS (Global Navigation Satellite System) receiver for providing information of the location on the field of said agricultural vehicle (200) or said agricultural implement (300); wherein said control unit (20) optionally is configured to receive information from said GNSS receiver and wherein said control unit (20) is configured to have stored therein, data relating to characteristics of the soil at different locations of a field.

12. A system (100) according to any of the preceding claims, wherein said sensing system (14) comprises one or more force transducers which are configured for sensing a horizontally oriented force of one or more of said soil loosening elements (22), such as a strain gauge; or in the form of one or more sensors for sensing a hydraulic pressure in a hydraulic actuator which is configured for suspending one or more of said one or more soil loosening elements;
and/or
wherein said system comprises one or more axle or wheel load sensors for sensing the load on one or more axles or wheels of said agricultural vehicle (200) or agricultural implement (300);
wherein said control unit (20) is configured for receiving a load sensing signal from said one or more axle or wheel load sensors; and wherein said control unit (20) is configured for providing said control signal (28) to said adjustment means (24) in a way wherein said control signal is depending on the load as sensed by said one or more load sensors, thereby allowing the severity of the soil loosening provided by said one or more soil loosening devices (10) to be dependent of the axle or wheel load of said agricultural vehicle or said agricultural implement.

13. An agricultural vehicle (200) comprising a system (100) according to any of the claims 1 - 12.

14. An agricultural implement (300) comprising a system (100) according to any of the claims 1 - 12; wherein said implement is a tilling implement, such as a harrowing implement or a sowing implement for sowing crop seeds.

15. Use of a soil loosening system (100) according to any of the claims 1 - 12 or of an agricultural vehicle (200) according to claim 13 or of an agricultural implement (300) according to claim 14 during performance of an agricultural work operation in an agricultural field.

## Patentansprüche

1. System (100) zur Bodenauflockerung von Boden (2), der durch Räder (4) eines landwirtschaftlichen Fahrzeugs (200) oder eines landwirtschaftlichen Geräts (300) verdichtet wurde, wobei das System umfasst:
- eine oder mehrere Bodenlockerungsvorrichtungen (10) zur Auflockerung von Boden in einer Radspur (12);
- in Bezug auf jede Bodenauflockerungsvorrichtung ein Erfassungssystem (14);
- eine Steuereinheit (20);
wobei jede der einen oder mehreren Bodenauflockerungsvorrichtungen (10) ein oder mehrere Bodenauflockerungselemente (22) zur Auflockerung von Boden in der Radspur (12) umfasst, und wobei jedes des einen oder der mehreren Bodenauflockerungselemente (22) mechanisch mit Einstellmitteln (24) verbunden ist/sind, um den Grad der von dem einen oder den mehreren Bodenauflockerungselementen (22) bereitgestellten Bodenauflockerung einzustellen;
**dadurch gekennzeichnet, dass** in Bezug auf jede Bodenauflockerungsvorrichtung (10) das Erfassungssystem (14) konfiguriert ist, um einen Höhenunterschied zwischen dem sich in der Radspur (12) befindlichen Boden und dem sich außerhalb der Radspur (12) befindlichen Boden (18) zu erfassen;
wobei das Erfassungssystem (14) konfiguriert ist, um ein oder mehrere Erfassungssignale (26) bereitzustellen, die den erfassten Höhenunterschied des Bodens darstellen; und
wobei die Steuereinheit (20) konfiguriert ist, um das eine oder die mehreren Erfassungssignale (26) zu empfangen, die von dem Erfassungssystem (14) bereitgestellt werden, und um ein Steuersignal (28) auf deren Basis bereitzustellen;
wobei das Einstellmittel (24) konfiguriert ist, um das Steuersignal (28) zu empfangen und auf dessen Basis den Grad der Bodenauflockerung des einen oder der mehreren Bodenauflockerungselemente (22) der einen oder der mehreren Bodenauflockerungsvorrichtungen (10) einzustellen.

2. System (100) nach Anspruch 1, wobei das Erfassungssystem (14) einen und nur einen Sensor (30, 30', 30") umfasst, der zum Erfassen eines Höhenunterschieds zwischen dem sich in der Radspur (12) befindlichen Boden (13, 16) und dem sich außerhalb der Radspur (12) befindlichen Boden (18) konfiguriert ist; oder wobei das Erfassungssystem (14) zwei oder mehr Sensoren (30, 30', 30") umfasst, wobei ein Sensor (30) zum Erfassen einer Höhe des sich in der Radspur (12) befindlichen Bodens (13, 16) konfiguriert ist, und wobei ein zusätzlicher und wahlweise mehr Sensoren (30', 30") zum Erfassen einer Höhe des sich außerhalb der Radspur (12) befindlichen Bodens (18) konfiguriert sind;
und/oder
wobei das Erfassungssystem (14) einen Sensor (30, 30', 30") umfasst, der zum Erfassen einer Höhe des sich in der Radspur (12) befindlichen Bodens (13) konfiguriert ist, bevor dieser Boden (13) einer Bodenauflockerung unterzogen wird;
und/oder
wobei das Erfassungssystem (14) einen Sensor (30, 30', 30") umfasst, der zum Erfassen einer Höhe des sich in der Radspur (12) befindlichen Bodens (16) konfiguriert ist, nachdem dieser Boden (16) einer Bodenauflockerung unterzogen wird;
und/oder
wobei das Erfassungssystem (14) einen Sensor (30, 30', 30") umfasst, der zum Erfassen einer Höhe des sich in der Radspur (12) befindlichen Bodens (13) konfiguriert ist, bevor dieser Boden (13) einer Bodenauflockerung unterzogen wird; und wobei das Erfassungssystem (14) weiterhin einen Sensor (30, 30', 30") umfasst, der zum Erfassen einer Höhe des sich in der Radspur (12) befindlichen Bodens (16) konfiguriert ist, nachdem der Boden (16) einer Bodenauflockerung unterzogen wird.

3. System (100) nach Anspruch 1 oder 2, wobei die Bodenauflockerungselemente (22) unabhängig Zinken oder Scharblätter sind.

4. System (100) nach einem der vorstehenden Ansprüche, wobei in Bezug auf eine oder mehrere Bodenauflockerungsvorrichtungen (10) die Einstellmittel (24) unabhängig konfiguriert sind, um den Grad der Bodenauflockerung durch Ändern der Arbeitstiefe des einen oder der mehreren Bodenauflockerungselemente (22) einzustellen; und/oder durch Ändern des Anstellwinkels des einen oder der mehreren Bodenauflockerungselemente (22); und/oder durch Ändern einer Bewegungsgeschwindigkeit des einen oder der mehreren Bodenauflockerungselemente (22), dem die durch das eine oder die mehreren Bodenauflockerungselemente bereitgestellte Bodenauflockerung durch mechanisch angetriebene Bodenauflockerungselemente bereitgestellt wird; und/oder durch Bewegung des einen oder der mehreren Bodenauflockerungselemente (22) mittels parallelogrammartiger Aufhängungsmittel.

5. System (100) nach einem der vorstehenden Ansprüche, wobei die Steuereinheit (20) konfiguriert ist, um das Steuersignal (28) an die Einstellmittel (24) der einen oder mehreren Bodenlockerungsvorrichtungen (10) auf der Basis des einen oder der mehreren Erfassungssignale (26) gemäß einem vorbestimmten Algorithmus bereitzustellen;
wobei der vorbestimmte Algorithmus wahlweise so konfiguriert ist, dass die Steuereinheit (20) konfiguriert ist, um ein Steuersignal (28) für die Einstellmittel (24) bereitzustellen, um den Grad der Bodenauflockerung der einen oder mehreren Bodenauflockerungsvorrichtungen (10) im Falle, dass das Erfassungssystem eine höhere Bodenhöhe an einer Stelle (18) außerhalb einer Radspur im Vergleich zu der Bodenhöhe des aufgelockerten Bodens an einer Stelle (16) in der Radspur (12) erfasst, zu erhöhen; und/oder wobei der vorbestimmte Algorithmus so konfiguriert ist, dass die Steuereinheit (20) konfiguriert ist, um ein Steuersignal (28) für die Einstellmittel (24) bereitzustellen, um den Grad der Bodenauflockerung der einen oder mehreren Bodenauflockerungsvorrichtungen (10) im Falle, dass das Erfassungssystem (14) eine höhere Bodenhöhe des gelockerten Bodens an einer Stelle (16) in der Radspur (12) im Vergleich zu der Bodenhöhe an einer Stelle (18) außerhalb der Radspur (12) erfasst, zu verringern; und/oder wobei der vorbestimmte Algorithmus so konfiguriert ist, dass die Steuereinheit (20) konfiguriert ist, um ein Steuersignal (28) an die Einstellmittel (24) auf der Basis einer erfassten Bodenhöhe plus/minus einem vorbestimmten Versatzwert bereitzustellen.

6. System (100) nach einem der vorstehenden Ansprüche, wobei in Bezug auf eine oder mehrere der Bodenauflockerungsvorrichtungen (10) das eine oder die mehreren Bodenauflockerungselemente (22) unabhängig konfiguriert sind, um von den Einstellmitteln (24) durch Drehung um eine Drehachse (A), wie zum Beispiel eine im Wesentlichen horizontale Drehachse, bewegt zu werden; oder wobei in Bezug auf eine oder mehrere der Bodenauflockerungsvorrichtungen (10) das eine oder die mehreren Bodenauflockerungselemente (22) unabhängig konfiguriert sind, um von den Einstellmitteln (24) durch Bewegung in einer wesentlichen vertikalen Richtung bewegt zu werden;
und/oder
wobei in Bezug auf eine oder mehrere der Bodenauflockerungsvorrichtungen (10) das eine oder die mehreren Bodenauflockerungselemente (22) in einer parallelogrammartigen Aufhängung aufgehängt sind, wodurch ermöglicht wird, dass die Bodenauflockerungselemente (22) durch die Einstellmittel (24) durch eine Bewegung in einer Richtung mit einer vertikalen Komponente und einer horizontalen Komponente bewegt werden.

7. System (100) nach einem der vorstehenden Ansprüche, wobei in Bezug auf eine oder mehrere der Bodenauflockerungsvorrichtungen (10) das Erfassungssystem (14) konfiguriert ist, um das eine oder die mehreren Erfassungssignale (26) über mechanische Erfassungsmittel bereitzustellen; oder wobei in Bezug auf eine oder mehrere der Bodenauflockerungsvorrichtungen (10) das Erfassungssystem (14) konfiguriert ist, um das eine oder die mehreren Erfassungssignale (26) über nichtmechanische Erfassungsmittel bereitzustellen; oder wobei in Bezug auf eine oder mehrere der Bodenauflockerungsvorrichtungen (10) das Erfassungssystem (14) konfiguriert ist, um das eine oder die mehreren Erfassungssignale (26) über Schallerfassungsmittel bereitzustellen;
und/oder
wobei das Erfassungssystem konfiguriert ist, um das eine oder die mehreren Erfassungssignale (26) über mechanische Erfassungsmittel bereitzustellen, die ein Erfassungsrad umfassen, das schwenkbar aufgehängt und konfiguriert ist, um der Oberfläche des Bodens (13, 16) in der Radspur (12) zu folgen, und auch ein oder mehrere zusätzliche Erfassungsräder (40) umfassen, die schwenkbar aufgehängt und konfiguriert ist/sind, um der Oberfläche des Bodens (18) zu folgen, der sich außerhalb der Radspur (12) befindet; wobei der Höhenunterschied zwischen dem sich in der Radspur (12) befindlichen aufgelockerten Boden (16) und dem sich außerhalb der Radspur (12) befindlichen Boden (18) auf der Basis der jeweiligen erfassten Höhen der zwei oder mehr Erfassungsräder bestimmt wird;
und/oder
wobei das Erfassungssystem (14) konfiguriert ist, um das eine oder die mehreren Erfassungssignale (26) über nichtmechanische Erfassungsmittel bereitzustellen, die einen oder mehrere Sender umfassen, die konfiguriert sind, um eine elektromagnetische Strahlung zu senden; und einen oder mehrere Empfänger umfassen, der/die konfiguriert ist/sind, um ein reflektiertes Signal der gesendeten elektromagnetischen Strahlung zu empfangen; und wobei der Höhenunterschied zwischen dem sich in der Radspur (12) befindlichen Boden (13,16) und dem sich außerhalb der Radspur befindlichen Boden (18), auf der Basis der Erkennung der Laufzeit, Frequenz, Wellenlänge, Intensität/Amplitude der beteiligten elektromagnetischen Strahlung oder einer Kombination davon bestimmt wird; wobei das Erfassungssystem (14) wahlweise ein Lasererfassungssystem, ein Infraroterfassungssystem oder ein Laserentfernungsabtastungs-Erfassungssystem umfasst.

8. System (100) nach Anspruch 7, wobei das Erfassungssystem (14) konfiguriert ist, um das eine oder die mehreren Erfassungssignale (26) über Schallerfassungsmittel bereitzustellen, die einen oder mehrere Sender umfassen, die konfiguriert sind, um eine Schallstrahlung zu senden; und einen oder mehrere Empfänger umfassen, der/die konfiguriert ist/sind, um ein reflektiertes Schallsignal der gesendeten Schallstrahlung zu empfangen; und wobei der Höhenunterschied zwischen dem sich in der Radspur (12) befindlichen Boden (13, 16) und dem sich außerhalb der Radspur (12) befindlichen Boden (18) auf der Basis der Erkennung der Laufzeit, Frequenz, Wellenlänge, Intensität/Amplitude der betreffenden Schallstrahlung oder einer Kombination davon bestimmt wird.

9. System (100) nach einem der vorstehenden Ansprüche, wobei die Steuereinheit (20) derart konfiguriert ist, dass sowohl in Bezug auf den Boden (13, 16) in der Radspur (12) als auch in Bezug auf den Boden (18) außerhalb der Radspur (12) eine Anzahl von Messproben der Bodenhöhen vorgenommen wird; und wobei die Steuereinheit (20) konfiguriert ist, um nachfolgend einerseits diese Messproben der Bodenhöhen in der Radspur (12) zu mitteln und andererseits diese Messproben der Bodenhöhen außerhalb der Radspur (12) zu mitteln, und wobei das Steuersignal (28) auf der Differenz der gemittelten Messproben der Bodenhöhen basiert;
wobei die Steuereinheit (20) wahlweise derart konfiguriert ist, dass die Messproben der Bodenhöhen unabhängig mit einer Abtastrate von 1 - 200 Hz durchgeführt werden; wie 5 - 150 Hz, zum Beispiel 10 - 100 Hz, wie 25 - 80 Hz, z. B. 30 - 60 Hz; und/oder wobei die Steuereinheit (20) derart konfiguriert ist, dass das Steuersignal (28) unabhängig mit einer Rate von 0,1 - 10 Hz, wie 0,5 - 9 Hz, z. B. 1 - 8 Hz, wie 2 - 7 Hz, z. B. 3 - 6 Hz oder 4 - 5 Hz bereitgestellt wird.

10. System (100) nach einem der vorstehenden Ansprüche, wobei die Steuereinheit (20) konfiguriert ist, um eine Filterung, wie zum Beispiel eine Tiefpassfilterung, der erfassten Höhen oder Höhenunterschiede durchzuführen, bevor das Steuersignal (28) bereitgestellt wird;
wobei die Steuereinheit (20) wahlweise konfiguriert ist, um das Steuersignal (28) mittels einer P- (Proportional)regelung, einer PID- (Proportional-Integral-Differenzial)Regelung, einer Dreipunktregelung oder einer Schrittregelung bereitzustellen.

11. System (100) nach einem der vorstehenden Ansprüche, weiter umfassend einen Monitor (52) und/oder Eingabemittel (54), wobei der Monitor (52) konfiguriert ist, um mit der Steuereinheit (20) gekoppelt zu werden, um einem Benutzer die Einstellungen und/oder Informationen in Bezug auf den Betrieb des Systems anzuzeigen, und wobei das Eingabemittel (54), z. B. in Form einer Tastatur, konfiguriert ist, um mit der Steuereinheit (20) gekoppelt zu werden, um das Einstellen und/oder Kalibrieren des Systems zu ermöglichen; wobei der Monitor (52) und/oder das Eingabemittel (54) wahlweise in Form einer HMI (Mensch-Maschine-Schnittstelle) oder einer GUI (grafische Benutzeroberfläche) vorliegt;
und/oder
wobei das System weiter einen GNSS-Empfänger (globales Satelliten-Navigationssystem) zum Bereitstellen von Informationen über den Standort des landwirtschaftlichen Fahrzeugs (200) oder des landwirtschaftlichen Geräts (300) auf dem Feld umfasst; wobei die Steuereinheit (20) wahlweise konfiguriert ist, um Informationen aus dem GNSS-Empfänger zu empfangen, und wobei die Steuereinheit (20) konfiguriert ist, um darin Daten in Bezug auf Eigenschaften des Bodens an verschiedenen Stellen eines Feldes gespeichert zu haben.

12. System (100) nach einem der vorstehenden Ansprüche, wobei das Erfassungssystem (14) einen oder mehrere Kraftwandler umfasst, die zum Erfassen einer horizontal ausgerichteten Kraft eines oder mehrerer der Bodenauflockerungselemente (22) konfiguriert sind, wie zum Beispiel einen Dehnungsmessstreifen; oder in Form eines oder mehrerer Sensoren zum Erfassen eines hydraulischen Drucks in einem hydraulischen Stellglied, das zum Aufhängen eines oder mehrerer des einen oder der mehreren Bodenauflockerungselemente konfiguriert ist;
und/oder
wobei das System einen oder mehrere Achs- oder Radlastsensoren zum Erfassen der Last auf einer oder mehreren Achsen oder Rädern des landwirtschaftlichen Fahrzeugs (200) oder landwirtschaftlichen Geräts (300) umfasst; wobei die Steuereinheit (20) konfiguriert ist, um ein Lasterfassungssignal aus dem einen oder den mehreren Achs- oder Radlastsensoren zu empfangen; und wobei die Steuereinheit (20) konfiguriert ist, um das Steuersignal (28) an die Einstellmittel (24) in einer Weise bereitzustellen, wobei das Steuersignal von der Last derart abhängt, wie sie von dem einen oder den mehreren Lastsensoren erfasst wird, wodurch ermöglicht wird, dass die Schwere der Bodenauflockerung, die von dem einen oder den mehreren Bodenauflockerungsmitteln (10) bereitgestellt wird, von der Achs- oder Radlast des landwirtschaftlichen Fahrzeugs oder des landwirtschaftlichen Geräts abhängig ist.

13. Landwirtschaftliches Fahrzeug (200), umfassend ein System (100) nach einem der Ansprüche 1 bis 12.

14. Landwirtschaftliches Gerät (300), umfassend ein System (100) nach einem der Ansprüche 1 bis 12, wobei das Gerät ein Bodenbearbeitungsgerät, wie zum Beispiel ein Eggengerät oder ein Sägerät zur Aussaat von Getreidesamen ist.

15. Verwendung eines Bodenauflockerungssystems (100) nach einem der Ansprüche 1 bis 12 oder eines landwirtschaftlichen Fahrzeugs (200) nach Anspruch 13 oder eines landwirtschaftlichen Geräts (300) nach Anspruch 14 während der Durchführung eines landwirtschaftlichen Arbeitsvorgangs auf einem landwirtschaftlichen Feld.

## Revendications

1. Système (100) d'ameublissement d'un sol (2) qui a été compacté par des roues (4) d'un véhicule agricole (200) ou d'un outil agricole (300), ledit système comprend :
- un ou plusieurs dispositifs d'ameublissement (10) pour ameublir le sol dans une trace de roues (12) ;
- en lien avec chaque dispositif d'ameublissement, un système de détection (14) ;
- une unité de commande (20) ;
dans lequel chacun desdits un ou plusieurs dispositifs d'ameublissement (10) comprend un ou plusieurs éléments d'ameublissement (22) pour ameublir le sol dans ladite trace de roues (12), et dans lequel chacun desdits un ou plusieurs éléments d'ameublissement (22) est/sont connecté(s) mécaniquement à un moyen d'ajustement (24) pour ajuster le degré d'ameublissement fourni par lesdits un ou plusieurs éléments d'ameublissement (22) ;
**caractérisé en ce que,** en lien avec chaque dispositif d'ameublissement (10), ledit système de détection (14) est configuré pour détecter une différence de hauteur entre un sol situé dans ladite trace de roues (12) et un sol (18) situé en dehors de ladite trace de roues (12) ;
dans lequel ledit système de détection (14) étant configuré pour fournir un ou plusieurs signaux de détection (26) représentatifs de ladite différence de hauteur détectée du sol ; et
dans lequel ladite unité de commande (20) est configurée pour recevoir lesdits un ou plusieurs signaux de détection (26) fournis par ledit système de détection (14) et pour fournir un signal de commande (28) sur la base de ceux-ci ;
dans lequel ledit moyen d'ajustement (24) est configuré pour recevoir ledit signal de commande (28), et sur la base de celui-ci pour ajuster le degré d'ameublissement desdits un ou plusieurs éléments d'ameublissement (22) desdits un ou plusieurs dispositifs d'ameublissement (10).

2. Système (100) selon la revendication 1, dans lequel ledit système de détection (14) comprend un seul et unique capteur (30, 30', 30") configuré pour détecter une différence de hauteur entre un sol (13, 16) situé dans ladite trace de roues (12) et un sol (18) situé en dehors de ladite trace de roues (12) ; ou dans lequel ledit système de détection (14) comprend au moins deux capteurs (30, 30', 30"), dans lequel un capteur (30) est configuré pour détecter une hauteur d'un sol (13,16) situé dans ladite trace de roues (12), et dans lequel un capteur supplémentaire et éventuellement d'autres capteurs (30', 30") sont configurés pour détecter une hauteur d'un sol (18) situé en dehors de ladite trace de roues (12) ;
et/ou
dans lequel ledit système de détection (14) comprend un capteur (30, 30', 30") qui est configuré pour détecter une hauteur d'un sol (13) situé dans ladite trace de roues (12) avant que le sol (13) ne soit soumis à l'ameublissement ;
et/ou
dans lequel ledit système de détection (14) comprend un capteur (30, 30', 30") qui est configuré pour détecter une hauteur d'un sol (16) situé dans ladite trace de roues (12) après que le sol (16) a été soumis à l'ameublissement ;
et/ou
dans lequel ledit système de détection (14) comprend un capteur (30, 30', 30") qui est configuré pour détecter une hauteur d'un sol (13) situé dans ladite trace de roues (12) avant que le sol (13) ne soit soumis à l'ameublissement ; et dans lequel ledit système de détection (14) comprend en outre un capteur (30, 30', 30") qui est configuré pour détecter une hauteur d'un sol (16) situé dans ladite trace de roues (12) après que le sol (16) a été soumis à l'ameublissement.

3. Système (100) selon la revendication 1 ou 2 dans lequel lesdits éléments d'ameublissement (22) étant indépendamment des dents ou des lames de coutre.

4. Système (100) selon l'une quelconque des revendications précédentes, dans lequel, en lien avec un ou plusieurs dispositifs d'ameublissement (10), ledit moyen d'ajustement (24) est indépendamment configuré pour ajuster le degré d'ameublissement par altération de la profondeur de travail desdits un ou plusieurs éléments d'ameublissement (22) ; et/ou par altération de l'angle d'attaque desdits un ou plusieurs éléments d'ameublissement (22) ; et/ou par altération d'une vitesse de déplacement desdits un ou plusieurs éléments d'ameublissement (22), dans un cas où ledit ameublissement fourni par lesdits un ou plusieurs éléments d'ameublissement est fourni par des éléments d'ameublissement entraînés mécaniquement ; et/ou par déplacements desdits un ou plusieurs éléments d'ameublissement (22) au moyen de moyens de suspension en forme de parallélogrammes.

5. Système (100) selon l'une quelconque des revendications précédentes, dans lequel ladite unité de commande (20) est configurée pour fournir ledit signal de commande (28) audit moyen d'ajustement (24) desdits un ou plusieurs dispositifs d'ameublissement (10) sur la base desdits un ou plusieurs signaux de détection (26) en fonction d'un algorithme prédéterminé ;
dans lequel ledit algorithme prédéterminé est éventuellement configuré de sorte que ladite unité de commande (20) soit configurée pour fournir un signal de commande (28) audit moyen d'ajustement (24) afin d'augmenter le degré d'ameublissement desdits un ou plusieurs dispositifs d'ameublissement (10) dans un cas où ledit système de détection détecte une hauteur de sol supérieure en un emplacement (18) en dehors d'une trace de roues par comparaison à la hauteur de sol d'un sol ameubli en un emplacement (16) dans ladite trace de roues (12) ; et/ou dans lequel ledit algorithme prédéterminé est configuré de sorte que ladite unité de commande (20) soit configurée pour fournir un signal de commande (28) audit moyen d'ajustement (24) afin de diminuer le degré d'ameublissement desdits un ou plusieurs dispositifs d'ameublissement (10) dans un cas où ledit système de détection (14) détecte une hauteur de sol supérieure de sol ameubli en un emplacement (16) dans ladite trace de roues (12), par comparaison à la hauteur de sol en un emplacement (18) en dehors de ladite trace de roues (12) ; et/ou dans lequel ledit algorithme prédéterminé est configuré de sorte que ladite unité de commande (20) soit configurée pour fournir un signal de commande (28) audit moyen d'ajustement (24) sur la base d'une hauteur détectée du sol plus/moins une valeur de décalage prédéterminée.

6. Système (100) selon l'une quelconque des revendications précédentes, dans lequel, en lien avec un ou plusieurs desdits dispositifs d'ameublissement (10), lesdits un ou plusieurs éléments d'ameublissement (22) sont indépendamment configurés pour être déplacés par ledit moyen d'ajustement (24) par rotation autour d'un axe de rotation (A), tel qu'un axe de rotation quasiment horizontal ; ou dans lequel, en lien avec un ou plusieurs desdits dispositifs d'ameublissement (10), lesdits un ou plusieurs éléments d'ameublissement (22) sont indépendamment configurés pour être déplacés par ledit moyen d'ajustement (24) par déplacement dans une direction quasiment verticale ;
et/ou
dans lequel, en lien avec un ou plusieurs desdits dispositifs d'ameublissement (10), lesdits un ou plusieurs éléments d'ameublissement (22) sont suspendus dans une suspension en forme de parallélogramme, permettant ainsi auxdits éléments d'ameublissement (22) d'être déplacés par ledit moyen d'ajustement (24) par déplacement dans une direction présentant une composante verticale et une composante horizontale.

7. Système (100) selon l'une quelconque des revendications précédentes, dans lequel, en lien avec un ou plusieurs desdits dispositifs d'ameublissement (10), ledit système de détection (14) est configuré pour fournir lesdits un ou plusieurs signaux de détection (26) par l'intermédiaire de moyens de détection mécanique ; ou dans lequel, en lien avec un ou plusieurs desdits dispositifs d'ameublissement (10), ledit système de détection (14) est configuré pour fournir lesdits un ou plusieurs signaux de détection (26) par l'intermédiaire de moyens de détection non mécanique ; ou dans lequel, en lien avec un ou plusieurs desdits dispositifs d'ameublissement (10), ledit système de détection (14) est configuré pour fournir lesdits un ou plusieurs signaux de détection (26) par l'intermédiaire de moyens de détection acoustique ;
et/ou
dans lequel ledit système de détection est configuré pour fournir lesdits un ou plusieurs signaux de détection (26) par l'intermédiaire de moyens de détection mécanique comprenant une roue de détection qui est suspendue de manière pivotante et configurée pour suivre la surface du sol (13, 16) dans ladite trace de roues (12), et comprenant également une ou plusieurs roues de détection supplémentaires (40) qui est/sont suspendues de manière pivotante et configurée(s) pour suivre la surface du sol (18) situé en dehors de ladite trace de roues (12) ; dans lequel la différence de hauteur entre un sol ameubli (16) situé dans ladite trace de roues (12) et un sol (18) situé en dehors de ladite trace de roues (12) est déterminée sur la base des hauteurs détectées respectives desdites au moins deux roues de détection ;
et/ou
dans lequel ledit système de détection (14) est configuré pour fournir lesdits un ou plusieurs signaux de détection (26) par l'intermédiaire de moyens de détection non mécanique comprenant un ou plusieurs émetteurs configurés pour émettre un rayonnement électromagnétique ; et comprenant un ou plusieurs récepteurs qui est/sont configuré(s) pour recevoir un signal réfléchi dudit rayonnement électromagnétique émis ; et dans lequel la différence de hauteur entre un sol (13, 16) situé dans ladite trace de roues (12) et un sol (18) situé en dehors de ladite trace de roues est déterminée sur la base d'une détection de temps de vol, de fréquence, de longueur d'onde, d'intensité/amplitude du rayonnement électromagnétique impliqué, ou une combinaison de celles-ci ; dans lequel ledit système de détection (14) comprend éventuellement un système de détection laser, un système de détection infrarouge ou un système de télémétrie laser à balayage.

8. Système (100) selon la revendication 7, dans lequel ledit système de détection (14) est configuré pour fournir lesdits un ou plusieurs signaux de détection (26) par l'intermédiaire de moyens de détection acoustique comprenant un ou plusieurs émetteurs configurés pour émettre un rayonnement acoustique ; et comprenant un ou plusieurs récepteurs qui est/sont configuré(s) pour recevoir un signal acoustique réfléchi dudit rayonnement acoustique émis ; et dans lequel la différence de hauteur entre un sol (13, 16) situé dans ladite trace de roues (12) et un sol (18) situé en dehors de ladite trace de roues (12) est déterminée sur la base d'une détection de temps de vol, de fréquence, de longueur d'onde, d'intensité/amplitude du rayonnement acoustique impliqué, ou une combinaison de celles-ci.

9. Système (100) selon l'une quelconque des revendications précédentes, dans lequel ladite unité de commande (20) est configurée de sorte qu'à la fois en lien avec un sol (13, 16) dans ladite trace de roues (12) et en lien avec un sol (18) en dehors de ladite trace de roues (12), un certain nombre d'échantillons de mesure de hauteurs de sol soient effectués ; et dans lequel ladite unité de commande (20) est configurée d'une part pour établir par la suite la moyenne de ces échantillons de hauteurs de sol dans ladite trace de roues (12) et d'autre part pour également établir la moyenne de ces échantillons de hauteurs de sol en dehors de ladite trace de roues (12), et dans lequel ledit signal de commande (28) est basé sur la différence desdits échantillons moyennés de hauteurs de sol ;
dans lequel ladite unité de commande (20) est éventuellement configurée de sorte que les échantillons de mesure de hauteurs de sol soient effectués indépendamment à une fréquence d'échantillonnage de 1-200 Hz ; telle que 5-150 Hz, par exemple 10-100 Hz, telle que 25-80 Hz, par ex. 30-60 Hz ; et/ou dans lequel ladite unité de commande (20) est configurée de sorte que ledit signal de commande (28) soit indépendamment fourni à une fréquence de 0,1-10 Hz, telle que 0,5-9 Hz, par ex. 1-8 Hz, telle que 2-7 Hz, par ex. 3-6 Hz ou 4-5 Hz.

10. Système (100) selon l'une quelconque des revendications précédentes, dans lequel ladite unité de commande (20) est configurée pour effectuer un filtrage, tel qu'un filtrage passe-bas, des hauteurs détectées ou des différences de hauteur avant de fournir ledit signal de commande (28) ;
dans lequel ladite unité de commande (20) est éventuellement configurée pour fournir ledit signal de commande (28) au moyen de, une commande P (proportionnelle), une commande PID (à différenciation par intégration proportionnelle), une commande à trois positions ou une commande pas-à-pas.

11. Système (100) selon l'une quelconque des revendications précédentes comprenant en outre un dispositif de surveillance (52) et/ou un moyen de saisie (54) ; dans lequel ledit dispositif de surveillance (52) est configuré pour être couplé à ladite unité de commande (20) afin d'afficher à l'attention d'un utilisateur les réglages et/ou les informations concernant le fonctionnement dudit système ; et dans lequel ledit moyen de saisie (54), par ex. sous forme d'un clavier, est configuré pour être couplé à ladite unité de commande (20) de manière à permettre le paramétrage et/ou l'étalonnage dudit système ; ledit dispositif de surveillance (52) et/ou ledit moyen de saisie (54) étant éventuellement sous forme d'une IHM (interface homme-machine) ou d'une IUG (interface utilisateur graphique) ;
et/ou
dans lequel ledit système comprenant en outre un récepteur GNSS (système mondial de navigation par satellite) pour fournir des informations concernant l'emplacement sur le terrain dudit dispositif agricole (200) ou dudit outil agricole (300) ; dans lequel ladite unité de commande (20) est éventuellement configurée pour recevoir des informations en provenance dudit récepteur GNSS et dans lequel ladite unité de commande (20) est configurée pour présenter stockées dans celle-ci, des données concernant des caractéristiques du sol en différents emplacements d'un terrain.

12. Système (100) selon l'une quelconque des revendications précédentes, dans lequel ledit système de détection (14) comprend un ou plusieurs transducteurs de force qui sont configurés pour détecter une force orientée horizontalement d'un ou plusieurs desdits éléments d'ameublissement (22), tels qu'une jauge de contrainte ; ou sous forme d'un ou plusieurs capteurs pour détecter une pression hydraulique dans un actionneur hydraulique qui est configuré pour suspendre un ou plusieurs desdits un ou plusieurs éléments d'ameublissement ;
et/ou
dans lequel ledit système comprend un ou plusieurs capteurs de charge par essieu ou par roue pour détecter la charge sur un ou plusieurs essieux ou roues dudit véhicule agricole (200) ou outil agricole (300) ;
dans lequel ladite unité de commande (20) est configurée pour recevoir un signal de détection de charge en provenance desdits un ou plusieurs capteurs de charge par essieu ou par roue ; et dans lequel ladite unité de commande (20) est configurée pour fournir ledit signal de commande (28) audit moyen d'ajustement (24) de sorte que ledit signal de commande dépende de la charge telle que détectée par lesdits un ou plusieurs capteurs de charge, permettant ainsi à l'importance de l'ameublissement fourni par lesdits un ou plusieurs dispositifs d'ameublissement (10) de dépendre de la charge par essieu ou par roue dudit véhicule agricole ou dudit outil agricole.

13. Véhicule agricole (200) comprenant un système (100) selon l'une quelconque des revendications 1-12.

14. Outil agricole (300) comprenant un système (100) selon l'une quelconque des revendications 1-12 ; dans lequel ledit outil est un outil de labourage, tel qu'un outil d'hersage ou un outil de semis pour semer des semences de culture.

15. Utilisation d'un système d'ameublissement (100) selon l'une quelconque des revendications 1-12 ou d'un véhicule agricole (200) selon la revendication 13 ou d'un outil agricole (300) selon la revendication 14 pendant la réalisation d'une manœuvre de travail agricole dans un terrain agricole.
